# EUROPÄISCHE PATENTSCHRIFT

(11) **EP 1 594 587 B1**
(45) Veröffentlichungstag und Bekanntmachung des Hinweises auf die Patenterteilung: **06.06.2012**
(21) Anmeldenummer: 04712443.3
(22) Anmeldetag: 19.02.2004
(51) Int. Cl.: B01D 41/04, B01J 37/06, B01J 38/48

(54) **VERFAHREN ZUM ENTFERNEN VON VERUNREINIGUNGEN UND/ODER VERSTOPFUNGEN AUS EINEM BÜNDEL VON KANÄLEN**
METHOD FOR REMOVING DIRT AND/OR CLOGGED MATERIAL FROM A SET OF DUCTS
PROCEDE DE SUPPRESSION D'IMPURETES ET/OU D'ELEMENTS OBSTRUANTS SE TROUVANT DANS UN FAISCEAU DE CONDUITES

(30) Priorität: 21.02.2003 AT 2682003
(43) Veröffentlichungstag der Anmeldung: 16.11.2005
(73) Patentinhaber: Strabag AG, 9800 Spittal/Drau (AT)
(72) Erfinder: RABITSCH, Hermann, A-1220 Wien (AT); KROTLA, Krzysztof, A-1080 Wien (AT)
(74) Vertreter: Schwarz & Partner
(86) Internationale Anmeldenummer: PCT/AT2004/000051
(87) Internationale Veröffentlichungsnummer: WO 2004/073835

(56) Entgegenhaltungen:
- US-B1- 6 387 836
- PATENT ABSTRACTS OF JAPAN Bd. 2000, Nr. 25, 12. April 2001 (2001-04-12) & JP 2001 232309 A (ARAI KAZUO), 28. August 2001 (2001-08-28)
- PATENT ABSTRACTS OF JAPAN Bd. 2002, Nr. 10, 10. Oktober 2002 (2002-10-10) & JP 2002 166116 A (SHUNAN CHIIKI JIBA SANGYO SHINKO CENTER), 11. Juni 2002 (2002-06-11)
- PATENT ABSTRACTS OF JAPAN Bd. 2002, Nr. 06, 4. Juni 2002 (2002-06-04) & JP 2002 045630 A (MITSUBISHI HEAVY IND LTD;RYOMEI ENG CORP LTD; HAIUEI TOOLE SYST KK), 12. Februar 2002 (2002-02-12)
- PATENT ABSTRACTS OF JAPAN Bd. 1995, Nr. 09, 31. Oktober 1995 (1995-10-31) & JP 07 144110 A (MATSUSHITA ELECTRIC WORKS LTD), 6. Juni 1995 (1995-06-06)

## Beschreibung

Die Erfindung betrifft ein Verfahren zum Entfernen von Verunreinigungen und/oder Verstopfungen aus einem Bündel von Kanälen, durch Behandeln mit einer Flüssigkeit, insbesondere aus miteinander fest verbundenen, zueinander parallelen Kanälen, sowie eine Vorrichtung zur Durchführung des Verfahrens.

Beispielsweise sind aus dem Dokument JP-A 2001-232309 eine Reinigungsvorrichtung sowie ein Verfahren zur Reinigung eines zylindrischen Luftfilters, wie er bei Antrieben von Kraftfahrzeugen eingesetzt wird, bekannt. Eine Klemmvorrichtung dient dabei zur Aufnahme eines Filters, der aus einem mehrfach mäanderförmig gefalteten Filterwerkstoff gebildet ist. Der Filterwerkstoff ist aus einem Vliesstoff hergestellt und wird während des Betriebs eines Motors von Luft durchströmt, wobei sich Schmutzpartikel absetzen. Zur Reinigung wird der beladene Luftfilter in eine Waschflüssigkeit getaucht und währenddessen um seine Längsachse gedreht, wobei Ablagerungen aus dem gefalteten Filterwerkstoff gespült werden.

Auf dem Gebiet der Reinigung stellt die Sauberhaltung oder das Saubermachen eines Gegenstandes mit einer Vielzahl von durchgehenden parallel angeordneten, insbesondere fest miteinander verbundenen, Kanälen ein besonderes Problem dar. Solche Kanäle können beispielsweise eng aneinander liegen und einen rechteckigen, bienenwabenförmigen, flächigen bzw. länglichen, runden oder sonstigen Querschnitt aufweisen.

Unter fest miteinander verbundenen Kanälen wird eine von Kanälen gebildete Einheit verstanden, wie z.B. Rohrbündel (Wärmetauscherpaket), Katalysatoren für die selektive katalytische Reduktion von Stickoxiden, etc.

Die Erfindung bezieht sich insbesondere auf ein Verfahren zur Regenerierung von gebrauchten DeNOx- bzw. DeDioxin-Katalysatoren. Diese werden in sogenannten DeNOₓ- bzw. DeDioxin-Anlagen zur Reduzierung und Zerstörung von Stickoxiden und/oder von (halogenierten) Dioxinen und Furanen in Rauchgasen oder sonstigen Abgasen eingesetzt.

Das "selektive katalytische Reduktionsverfahren", kurz SCR (Selective Catalytic Reduction), ist eine Möglichkeit, die z.B. bei der Verbrennung von fossilen Brennstoffen in Feuerungsanlagen entstehenden Stickoxide ("NOx", das heißt ein Gemisch aus NO und NO₂), wenn gewünscht auch weitgehend, zu vermindern. Beim SCR-Prozeß werden unter Einsatz von Ammoniak oder von unter den Systembedingungen Ammoniak bildenden Substanzen als Reduktionsmittel und eines spezifischen Katalysators die Stickoxide zu Stickstoff und Wasser umgesetzt. Da katalytische Reaktionen an der Oberfläche des Katalysators ablaufen, muss durch Verwendung entsprechend poröser Materialien eine große spezifische Oberfläche für die Reaktion zur Verfügung gestellt werden. Durch Verwendung homogener keramischer Katalysatoren, z.B. in Wabenform, wird man dieser Anforderung gerecht. In der Hauptmasse besteht der Katalysator z.B. aus dem Grundstoff Titandioxid (TiO₂), in dem die aktiven Metallverbindungen (wie vor allem V₂O₅, WO₃) homogen verteilt sind. Der Katalysator kann aber auch als Beschichtung auf einem Träger, z.B. einem Metallblech, aufgebracht sein.

Die gleichen bzw. modifizierten Katalysatoren können unter oxidativen Bedingungen zur Verringerung der Emission von organischen Produkten unvollständiger Verbrennung in Abgasen von Verbrennungsanlagen, wie eben z.B. (halogenierten) Dioxinen und Furanen, eingesetzt werden.

Den chemischen Umsetzungen, die auf der Katalysatoroberfläche ablaufen, sind Transportprozesse vorgelagert und nachgeschaltet. Nach Adsorption der Reaktionsteilnehmer an der inneren Oberfläche des Katalysators kommt es durch chemische Kombination der Reaktionsteilnehmer mit dem Katalysator zu einer Herabsetzung der zur Einleitung der Reaktion unbedingt erforderlichen Aktivierungsenergie. Konsequenz ist die Beschleunigung der Reaktion bzw. der Einstellung des Gleichgewichts.

Wenn diese aktiven Zentren, z.B. durch Anlagerung von in der Flugasche enthaltenen Alkali- und Erdalkalimetallen bzw. deren Verbindungen, blockiert werden und dadurch die notwendige aktivierte NH₃-Adsorption teilweise verhindert wird, kommt es zur Abnahme der Aktivität. Zu dieser Vergiftung der aktiven Bereiche der Katalysatoroberfläche durch adsorbierte Katalysatorgifte kommt die Verstopfung der Poren z.B. durch gebildetes Kalziumsulfat CaSO₄ und Ammoniumhydrogensulfat NH₄HSO₄. Da der Katalysator nicht 100%ig selektiv auf eine bestimmte Reaktion eingestellt werden kann, fördert der Katalysator auch einige Nebenreaktionen, von denen die Konvertierung von SO₂ zu SO₃ in einer relevanten Größenordnung ablaufen kann. Diese Reaktion kann zwar durch die Katalysatorzusammensetzung minimiert werden, es genügt aber der kleine Anteil von SO₃, um mit dem unreagierten NH₃ (als "NH₃-Schlupf" bezeichnet) und H₂O zu verschiedenen Salzen, primär zu Ammoniumhydrogensulfat und Ammoniumsulfat (NH₄)₂SO₄ zu reagieren bzw. sich mit der Flugasche zu verbinden.

Diese Verbindungen bilden sich bei tieferen Temperaturen (Kondensation beim Unterschreiten des Taupunktes von Ammoniumhydrogensulfat). Sie können sich am Katalysator ablagern und zusätzlich mit anklebenden Teilchen (z.B. Asche, feiner Staub, SiO₂, Al₂O₃) eine Poren- oder Kanalverstopfung und dadurch eine Aktivitätsminderung der Katalysatoren bewirken.

Somit ist die Art der Zusammensetzung der Verbindungen, die sich am Katalysator ablagern können, von der Zusammensetzung der Flugasche, des Rauchgases und von der Betriebstemperatur abhängig. Es handelt sich dabei im allgemeinen um Alkali- und Erdalkalimetall-Verbindungen, die in der Flugasche als Oxide und durch deren Reaktion mit SO₃ als Sulfate enthalten sind und sich entweder an der Oberfläche mit anderen in der Flugasche enthaltenen Verbindungen, wie z.B. SiO₂ und Al₂O₃, anlagern und die Poren oder Kanäle verstopfen, oder die aktiven Zentren durch ihre Elektronendonatoreigenschaften blockieren und dadurch die erforderliche aktivierte NH₃-Adsorption verhindern.

Die bisherigen Methoden zum Reinigen solcher Katalysatoren waren mit wesentlichen Nachteilen behaftet. So hat man versucht, die Katalysatoren, d.h. deren Kanäle, mit Sprühstrahlen aus Druckwasser zu reinigen (z.B. bekannt aus JP 58030345 A, JP 59062329 A und JP 59066352 A, was jedoch wegen der Enge der Kanäle und deren Vielzahl äusserst zeitaufwendig und arbeitsintensiv war. Weiters haben sich verschiedene mechanische Reinigungsmethoden ebenfalls nicht durchgesetzt, da hiermit hohe Kosten, und zwar ebenfalls durch Zeitaufwand, verbunden sind.

Gemäß der JP 58030345 A wurde nicht nur Waschwasser sondern ein Gemisch aus Waschwasser und Druckgas in die Kanäle von einer Seite gesprüht. Gemäß der JP 59049849 A werden die Kanäle von Katalysatoren zunächst durch das Einblasen von Druckluft oder durch Absaugen mittels eines Vakuums vom Staub gereinigt, worauf die Katalysatoren in einen Spültank eingebracht werden und Wasser durch die Kanäle geleitet wird.

Die Erfindung stellt sich die Aufgabe, ein Verfahren der eingangs beschriebenen Art sowie eine Einrichtung zur Durchführung des Verfahrens zu schaffen, welche mit einem geringen Arbeitsaufwand verbunden sind und in kurzer Zeit und weiters mit geringem Materialaufwand diese Reinigung der Kanäle ermöglichen.

Insbesondere stellt sich die Erfindung die Aufgabe, die Zahl der für die Katalyse verfügbaren aktiven Zentren soweit wie möglich bzw. wie erwünscht bis zur Aktivität des frischen Katalysators zu erhöhen und dadurch einen Katalysator völlig oder zumindest grösstenteils zu regenerieren.

Diese Aufgabe wird erfindungsgemäss dadurch gelöst, die Kanäle wiederholt alternierend mit der Flüssigkeit von ihren Enden her gefüllt werden und dass zumindest ein Teil der eingefüllten Flüssigkeit über dieselben Einfüllenden entleert wird. Durch das mehrfache Ein-und Ausfliessen der Flüssigkeit in die/aus den Kanäle(n) wird eine hohe Reinigungswirkung durch die Schwerkraft und den Impuls der Flüssigkeit erzielt. Ein mehrmaliges Bespülen bzw. Fluten und wieder Entleeren der Kanäle von beiden Richtungen hat sich für den Reinigungsvorgang als äusserst effizient erwiesen.

Hierbei wird zweckmäßig das Bündel von Kanälen zwecks Befüllens und zwecks Entleerens in gegenüber der Horizontalen geneigte Stellungen gebracht. Diese sind vorzugsweise geringer als 45°, bevorzugt geringer als 20°, insbesondere geringer als 10°.

Das Befüllen der Kanäle kann zweckmäßig durch Tauchen, durch Begießen oder durch Besprühen erfolgen. Eine bevorzugte Flüssigkeit ist Wasser mit Umgebungs- oder erhöhter Temperatur mit oder ohne die Reinigungsleistung erhöhenden Zusätzen, wie z.B. oberflächenaktive Substanzen.

Das Entleeren der Kanäle erfolgt vorzugsweise mit Hilfe der Schwerkraft. Es ist jedoch auch möglich, das Entleeren der Kanäle durch Aufbringen von Druck zu bewerkstelligen.

Das beschriebene physikalische Wirkprinzip kann durch weitere hydrodynamische Wirkprinzipien, hervorgerufen durch eine Beschallung oder eine zusätzlich durch eine Flüssigkeitsumlaufeinrichtung erzeugte Strömung in einem Bad unterstützt werden.

Eine besonders vorteilhafte Ausführungsform ist dadurch gekennzeichnet, dass das Befüllen und Entleeren der Kanäle durch Verschwenken und/oder Drehen der Kanäle um eine Achse, die sich quer zur Längsrichtung der Kanäle erstreckt und sich vorzugsweise etwa im Bereich des Schwerpunkts des Bündels der Kanäle befindet, erfolgt, wobei zweckmäßig das Verschwenken bei einem Stand des Niveaus der Flüssigkeit erfolgt, der in etwa der Höhe der Achse zum Verschwenken und/oder Verdrehen liegt, und wobei weiters vorteilhaft das Befüllen und Entleeren der Kanäle mit einer Frequenz von 0,1 bis 2 Wiederholungen pro Minute durchgeführt wird. Der Stand des Niveaus der Flüssigkeit kann vorzugsweise während eines Reinigungsvorganges auch verändert werden.

Eine Vorrichtung zur Durchführung des erfindungsgemäßen Verfahrens ist gekennzeichnet durch die Merkmale von Anspruch 13.

Zweckmäßig weist der Spülbehälter an zwei einander gegenüberliegenden Seiten Spülöffnungen zum Durchtritt der Flüssigkeit zwecks Zutritts zu den Enden der Kanälen auf, wobei er vorteilhaft mit Haltevorrichtungen zum Festhalten eines Bündels von Kanälen, insbesondere Klemmvorrichtungen, versehen ist.

Eine besonders vorteilhafte Ausführungsform ist dadurch gekennzeichnet, dass der Spülbehälter um eine Achse mittels einer Antriebseinrichtung schwenkbar und/oder drehbar ist, wobei zweckmässig die Achse des Spülbehälters etwa im Bereich seines Schwerpunktes angeordnet ist, u.zw. etwa mittig zwischen den Spülöffnungen.

Die Erfindung ist nachfolgend anhand eines in der Zeichnung dargestellten Ausführungsbeispiels näher erläutert, wobei Fig. 1 eine erfindungsgemässe Vorrichtung in schematischer Darstellung in einer Ausgangsposition zeigt, u.zw. im Schnitt. Die Fig. 2 und 3 zeigen diese Vorrichtung in unterschiedlichen Arbeitspositionen, Fig. 4 eine Variante.

Ein Behälter 1 zur Aufnahme einer Flüssigkeit 2 ist mit einem Zu- 3 und Ablauf 4 für diese Flüssigkeit 2 ausgestattet, wobei der Ablauf 4 an der tiefsten Stelle des Behälters 1 vorgesehen ist und auch zum Abzug von im Behälter 1 anfallenden Verunreinigungen dient. Die im Behälter 1 vorgesehene Flüssigkeit 2 kann nach dem Abzug aus dem Behälter 1 einer nicht dargestellten Reinigungsstation zugeführt und anschliessend wieder in den Behälter 1 über den Zulauf 2 zugeleitet werden.

In dem Behälter 1 ist eine Tragvorrichtung 5, die als Spülbehälter ausgebildet ist, um eine Achse 6, die etwa im Schwerpunkt dieser Tragvorrichtung vorgesehen ist, schwenkbar oder drehbar gelagert. Zum Antrieb dient eine an der Achse angeflanschte Antriebsvorrichtung. Der Behälter 1 ist bis zu einem Niveau 7, das etwa in der Höhe der Achse 6 des Spülbehälters 5 liegt, mit der Flüssigkeit 2 gefüllt, wobei dieser Niveaustand mittels einer Niveauregelung oder Niveausteuerung eingehalten oder geändert werden kann.

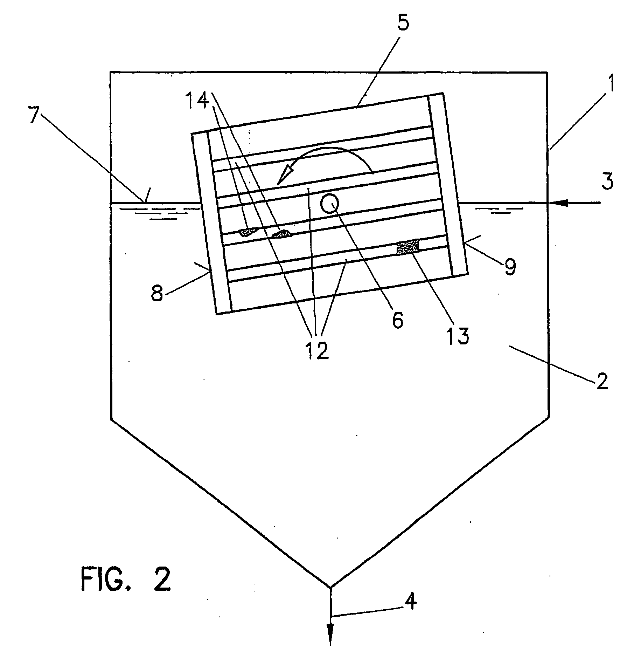

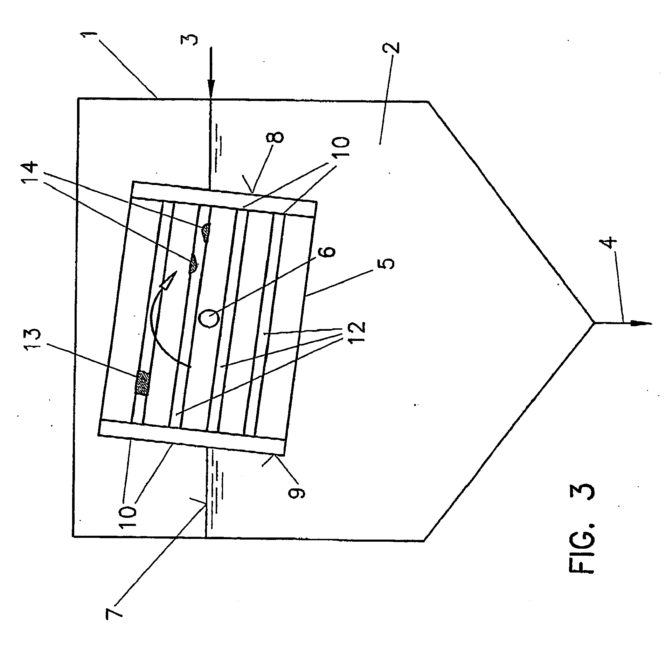

Der Spülbehälter 5 weist an zwei einander gegenüberliegenden Enden 8, 9 Spülöffnungen 10 auf, sodass er beim Eintauchen in die Flüssigkeit 2 mit dieser gefüllt bzw. beim Hochschwenken wieder entleert werden kann. In dem Spülbehälter 5 sind Bündel 11 von Kanälen 12, vorzugsweise mit fest verbundenen und zueinander parallelen Kanälen 12, eingesetzt, u.zw. derart, dass ein Bündel 11 - es können auch mehrere Bündel 11 fest verbundener Kanäle 12 parallel zueinander im Spülbehälter 5 untergebracht werden - während einer Schwenkbewegung des Spülbehälters 5 (vgl. Fig. 2 und 3) von diesem mitbewegt wird und gegenüber dem Spülbehälter 5 fixiert ist, beispielsweise mittels einer Halte- oder Klemmvorrichtung oder dadurch, dass der Spülbehälter 5 derart bemessen ist, dass ein Bündel 11 oder mehrere Bündel 11 genau und im wesentlichen spielfrei in den Spülbehälter 5 passen.

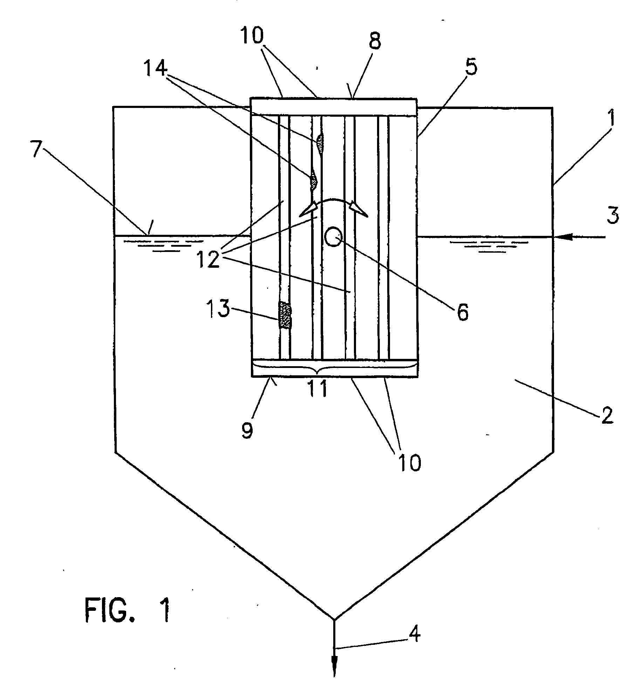

Wie aus Fig. 1 schematisch zu erkennen ist, ist einer der Kanäle 12 mit einer Verunreinigung 13 verstopft und weist eine Verunreinigung 14 auf. Wird nun der Spülbehälter verschwenkt, wie dies in den Fig. 2 und 3 zu ersehen ist, gelangt Flüssigkeit 2 sowohl einmal von der einen Seite als auch bei einer Schwenkbewegung nach der anderen Richtung von der anderen Seite bis zur Verunreinigung, und zwar jeweils vom offenen Ende des Kanals 12. Beim Zurückschwenken strömt die Flüssigkeit 2 wiederrum aus dem Kanal 12 mit Hilfe von Schwerkraftwirkung aus.

Die Antriebseinrichtung ist hinsichtlich der Umdrehungsgeschwindigkeit bzw. Frequenz in weiten Bereichen einstellbar, und zwar vorzugsweise in einem Bereich von 0,1 bis 2 Schwenkwiederholungen pro Minute. Ein mehrmaliges Bespülen bzw. Fluten und wieder Entleeren der Kanäle 12 von beiden Richtungen hat sich für den Reinigungsvorgang als äusserst effizient erwiesen.

Alternativ erfolgt die Befüllung der Kanäle durch Begießen, Bespritzen oder Besprühen, wobei die Bewegung des Spülbehälters und somit der Kanäle identisch, wie oben beschrieben, erfolgt, der Spülbehälter jedoch nicht mit der Reinigungsflüssigkeit gefüllt ist. Eine Kombination mit einer gewissen Füllmenge des Spülbehälters ist selbstverständlich gleichfalls möglich.

Die Flüssigkeit 2 zur Reinigung weist je nach den auftretenden Verunreinigungen unterschiedliche Zuswmnensetzungen auf.

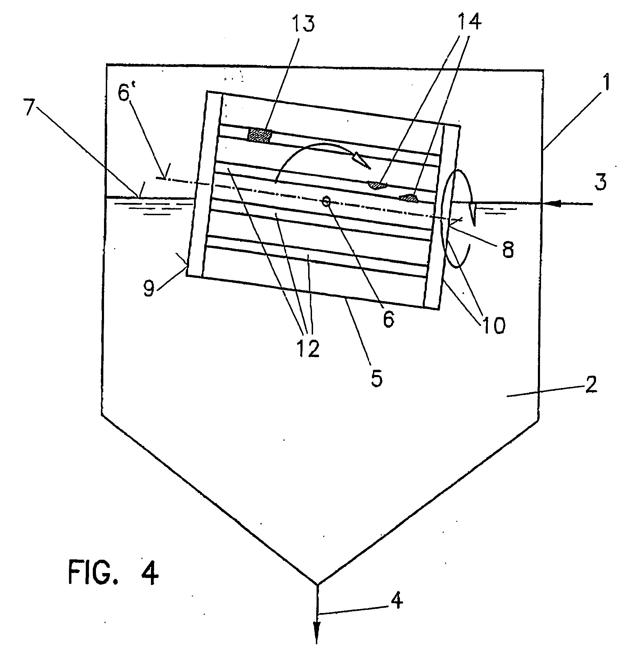

Das Befüllen und Entleeren der Kanäle erfolgt gemäß einer Variante, die in Fig. 4 veranschaulicht ist, durch Drehen der Kanäle 12 um eine Achse 6', die sich in Längsrichtung der Kanäle 12 und parallel zu diesen erstreckt und sich vorzugsweise etwa im Bereich des Schwerpunktes des Bündels der Kanäle 12 befindet, wobei dies zweckmäßig bei einem Stand des Niveaus 7 der Flüssigkeit 2 erfolgt, der etwa in der Höhe der Achse 6' zum Drehen liegt. Somit taucht in diesem Fall etwa die Hälfte der Kanäle 12, die horizontal angeordnet wären, in die Flüssigkeit 2 ein. Zwecks Befüllens und zwecks Entleerens der Kanäle 12 wird jedoch die Achse 6' und werden somit die Kanäle 12 in gegenüber der Horizontalen geneigte Stellungen gebracht. Diese sind vorzugsweise geringer als 45°, bevorzugt geringer als 20°, insbesondere geringer als 10°, und wechseln nach einigen Umdrehungen, beispielsweise nach zwei, vorzugsweise nach jeder Drehung ihre Neigung von einer Seite auf die andere. Weiters erfolgt das Befüllen und Entleeren der Kanäle 12 vorteilhaft durch Drehen mit 0,1 bis 2 Umdrehungen pro Minute. Der Stand des Niveaus 7 der Flüssigkeit kann vorzugsweise während eines Reinigungsvorganges auch verändert werden.

Alternativ kann auch hierbei die Befüllung der Kanäle durch Begießen, Bespritzen oder Besprühen erfolgen. Eine Kombination mit einer gewissen Füllmenge des Spülbehälters ist selbstverständlich gleichfalls möglich.

Das Waschen in wässrigen Flotten ist ein komplexer Vorgang, bei dem zahlreiche physikalische und chemische Einflüsse zusammenwirken. Man versteht darunter sowohl das Entfernen von wasserlöslichen Ablagerungen 14 durch Wasser oder wässrige Lösungen waschaktiver Substanzen als auch das Ablösen wasserunlöslicher Ablagerungen 14. Dabei ist eine Redeposition der bereits abgelösten unlöslichen Anteile z.B. durch eine Beschallung oder durch eine Stabilisierung der dispergierten Anteile zu verhindern. Das Wasser dient als Lösemittel für Waschmittel und für lösliche Verbindungen sowie als Transportmedium für die dispergierten Anteile. Der Waschvorgang wird mit dem Benetzen und Durchdringen des Substrates eingeleitet.

Das erfindungsgemässe Verfahren hat sich für Katalysatoren als besonders effizient erwiesen und führt in jedem Fall zu einer wesentlichen Aktivitätserhöhung des gereinigten Katalysators im Vergleich zum verunreinigten.

Die so behandelten Katalysatoren können mit ihrer zurückgewonnenen Aktivität erneut in eine DeNOx-, DeDioxin- bzw. kombinierte Anlage eingebaut werden.

## Patentansprüche

1. Verfahren zum Entfernen von Verunreinigungen (14) und/oder Verstopfungen (13) aus einem Bündel (11) von Kanälen (12), durch Behandeln mit einer Flüssigkeit (2), insbesondere aus miteinander fest verbundenen, zueinander parallelen Kanälen (12), **dadurch gekennzeichnet, dass** die Kanäle (12) wiederholt alternierend mit der Flüssigkeit (2) von ihren Enden her gefüllt werden und dass zumindest ein Teil der eingefüllten Flüssigkeit über dieselben Einfüllenden entleert wird.

2. Verfahren nach Anspruch 1, **dadurch gekennzeichnet, dass** das Bündel (11) von Kanälen (12) zwecks Befüllens und zwecks Entleerens in eine gegenüber der Horizontalen geneigte Stellung gebracht wird, die vorzugsweise geringer ist als 45°, weiters geringer als 20°, insbesondere geringer als 10°.

3. Verfahren nach Anspruch 1 oder 2, **dadurch gekennzeichnet, dass** das Befüllen der Kanäle (12) mit der Flüssigkeit (2) durch Tauchen erfolgt.

4. Verfahren nach Anspruch 1 oder 2, **dadurch gekennzeichnet, dass** das Befüllen der Kanäle (12) durch Begießen erfolgt.

5. Verfahren nach Anspruch 1 oder 2, **dadurch gekennzeichnet, dass** das Befüllen der Kanäle (12) durch Besprühen erfolgt.

6. Verfahren nach einem oder mehreren der Ansprüche 1 bis 5, **dadurch gekennzeichnet, dass** das Entleeren der Kanäle (12) mit Hilfe von Schwerkraft erfolgt.

7. Verfahren nach einem oder mehreren der Ansprüche 1 bis 5, **dadurch gekennzeichnet, dass** das Entleeren der Kanäle (12) durch Aufbringen von Druck erfolgt.

8. Verfahren nach einem oder mehreren der Ansprüche 1 bis 3 und 6, **dadurch gekennzeichnet, dass** das Tauchen und Entleeren bzw. nur das Entleeren der Kanäle (12) durch Verschwenken und/oder Drehen der Kanäle (12) um eine Achse (6), die sich quer zur Längsrichtung der Kanäle (12) erstreckt und sich vorzugsweise etwa im Bereich des Schwerpunkts des Bündels (11) der Kanäle (12) befindet, erfolgt.

9. Verfahren nach einem oder mehreren der Ansprüche 1 bis 6, **dadurch gekennzeichnet**, das Tauchen und Entleeren bzw. nur das Entleeren der Kanäle (12) durch Verschwenken und Drehen der Kanäle (12) um eine Achse (6'), die sich in Längsrichtung der Kanäle (12) erstreckt und sich vorzugsweise etwa im Bereich des Schwerpunktes des Bündels (11) der Kanäle (12) befindet, erfolgt.

10. Verfahren nach Anspruch 8 oder 9, **dadurch gekennzeichnet, dass** das Verschwenken bei einem Stand des Niveaus (7) der Flüssigkeit (2) erfolgt, der in etwa der Höhe der Achse (6) zum Verschwenken und/oder Verdrehen liegt.

11. Verfahren nach einem oder mehreren der Ansprüche 1 bis 10, **dadurch gekennzeichnet, dass** das Befüllen und Entleeren der Kanäle (12) mit einer Frequenz von 0,1 bis 2 Wiederholungen pro Minute durchgeführt wird.

12. Verfahren nach einem oder mehreren der Ansprüche 1 bis 11, **dadurch gekennzeichnet, dass** zum Spülen Wasser mit Umgebungs- oder erhöhter Temperatur verwendet wird, vorzugsweise mit die Reinigungsleistung erhöhenden Zusätzen, wie z.B. oberflächenaktiven Substanzen.

13. Reinigungsvorrichtung, mit einem mit Flüssigkeit (2) bis zu einem vorbestimmten und gegebenenfalls veränderbaren Niveau (7) gefüllten Behälter (1) und einer um eine Achse (6) schwenkbaren und/oder drehbaren Tragvorrichtung (5) zur Aufnahme einer zu reinigenden Einrichtung (11), **dadurch gekennzeichnet, dass** die zu reinigende Einrichtung ein Bündel (11) von miteinander fest verbundenen und zueinander parallelen Kanälen (12) umfasst und die Trageinrichtung (5), die von einem einen Flüssigkeitsdurchtritt ermöglichenden Spülbehälter gebildet ist, das Bündel (11) derart aufnimmt, dass die Achse (6) sich etwa senkrecht zur Längserstreckung der Kanäle erstreckt.

14. Vorrichtung nach Anspruch 13, **dadurch gekennzeichnet, dass** der Spülbehälter (5) an zwei einander gegenüberliegenden Seiten (8, 9) Spülöffnungen (10) zum Durchtritt der Flüssigkeit (2) zwecks Zutritts zu den Enden der Kanäle (12) aufweist.

15. Vorrichtung nach Anspruch 13 oder 14, **dadurch gekennzeichnet, dass** der Spülbehälter (5) mit Haltevorrichtungen zum Festhalten eines Bündels (11) von Kanälen (12), insbesondere Klemmvorrichtungen, versehen ist.

16. Vorrichtung nach einem oder mehreren der Ansprüche 13 bis 15, **dadurch gekennzeichnet, dass** der Spülbehälter (5) um eine Achse (6) mittels einer Antriebseinrichtung schwenkbar und/oder drehbar ist.

17. Vorrichtung nach einem oder mehreren der Ansprüche 13 bis 16, **dadurch gekennzeichnet, dass** der Spülbehälter (5) um eine parallel zu den Kanälen (12) angeordnete Achse (6') mittels einer Antriebseinrichtung schwenkbar und drehbar ist.

18. Vorrichtung nach einem oder mehreren der Ansprüche 16 und 17, **dadurch gekennzeichnet, dass** die Achse (6) des Spülbehälters (5) etwa im Bereich seines Schwerpunktes angeordnet ist, u.zw. etwa mittig zwischen den Spülöffnungen (10).

## Claims

1. A method for removal of fouling (14) and/or plugging (13) out of a bundle (11) of channels (12) by treatment with a liquid (2), in particular out of firmly interconnected channels (12) oriented in parallel to each other which comprises filling the channels (12) repeatedly and alternately with the liquid (2) from their ends and draining at least part of the filled in liquid off the same ends.

2. The method according to claim 1, which comprises positioning the bundle (11) of channels (12) for filling and for draining in a position inclined to the horizontal which is preferably less than 45°, also less than 20°, in particular less than 10°.

3. The method according to claim 1 or 2, which comprises filling the channels (12) with liquid (2) by immersion.

4. The method according to claim 1 or 2, which comprises filling the channels (12) by sprinkling.

5. The method according to claim 1 or 2, which comprises filling the channels (12) by spraying.

6. The method according to one or more claims of claim 1 to 5, which comprises draining the channels (12) by means of gravity.

7. The method according to one or more claims of claim 1 to 5, which comprises draining the channels (12) by applying pressure.

8. The method according to one or more claims of claim 1 to 3 and 6, which comprises immersion and draining or draining only respectively of the channels (12) by turning and/or rotating of the channels (12) via an axis (6), which is positioned transversal to the longitudinal direction of the channels (12) and is preferably positioned near the area of the center of gravity of the bundle (11) of the channels (12).

9. The method according to one or more claims of claim 1 to 6, which comprises immersion and draining or draining only, respectively, of the channels (12) by turning and rotating of the channels (12) via an axis (6'), which extends in longitudinal direction of the channels (12) and is preferably positioned near the area of the center of gravity of the bundle (11) of the channels (12).

10. The method according to claim 8 or 9, which comprises rotating at the height of the level (7) of the liquid (2), which corresponds approximately with the height of the axis (6) of turning and/or rotating.

11. The method according to one or more claims of claim 1 to 10, which comprises filling and draining of the channels (12) with a frequency of 0.1 to 2 repetitions per minute.

12. The method according to one or more claims of claim 1 to 11, which comprises applying rinsing with water with ambient temperature or above preferably with additives which increase the cleaning capacity, e.g. surface active substances.

13. Cleaning apparatus, which comprises a basin (1) being filled with a liquid (2) at a defined and if necessary adjustable level (7) and a supporting device (5), which can be turned and/or rotated via an axis (6), for holding a device (11) to be cleaned, **characterized in that** the device to clean comprises a bundle (11) of firmly interconnected channels (12) oriented in parallel to each other and that the supporting device (5), which is being built by a rinse cage which allows the liquid to pass through, takes the bundle in such a way, that the axis (6) extends about transversally to the longitudinal direction of the channels (12).

14. The apparatus according to claim 13, wherein the rinse cage comprises rinsing openings (10) on two opposite sides (8, 9) so that the liquid (2) can pass through and reach the end of the channels (12).

15. The apparatus according to claim 13 or 14, wherein the rinse cage (5) comprises equipment with devices for holding a bundle (11) of channels (12), in particular clamping devices.

16. The apparatus according to one or more claims of claim 13 to 15, which comprises the possibility of turning and/or rotating the rinse cage (5) via an axis (6) by means of an actuation device.

17. The apparatus according to one or more claims of claim 13 to 16, which comprises the possibility to turn and rotate the rinse cage (5) via an axis (6'), which is positioned in parallel to the channels (12), by means of an actuating device.

18. The apparatus according to one or more claims of claim 16 and 17, which comprises positioning the axis (6) of the rinsing cage (5) near the area of its center of gravity, which is about in the middle of the rinsing openings (10).

## Revendications

1. Procédé pour supprimer des impuretés (14) et/ou des obstructions (13) hors d'un faisceau (11) de canaux (12), par traitement avec un liquide (2), en particulier hors de canaux mutuellement parallèles (12) et fermement reliés les uns aux autres,
**caractérisé en ce que** les canaux (12) sont remplis de façon répétée en alternance avec le liquide (2) depuis leurs extrémités, et **en ce qu'**au moins une partie du liquide rempli est vidée depuis la même extrémité que le remplissage.

2. Procédé selon la revendication 1, **caractérisé en ce que** le faisceau (11) de canaux (12) est amené, en vue du remplissage et en vue du vidage, dans une position inclinée par rapport à l'horizontale, avec une inclinaison de préférence inférieure à 45°, de façon plus préférée inférieure à 20 ° et en particulier inférieure à 10 °.

3. Procédé selon la revendication 1 ou 2, **caractérisé en ce que** le remplissage des canaux (12) avec le liquide (2) a lieu par immersion.

4. Procédé selon la revendication 1 ou 2, **caractérisé en ce que** le remplissage des canaux (12) a lieu par versement.

5. Procédé selon la revendication 1 ou 2, **caractérisé en ce que** le remplissage des canaux (12) a lieu par pulvérisation.

6. Procédé selon l'une ou plusieurs des revendications 1 à 5, **caractérisé en ce que** le vidage des canaux (12) a lieu à l'aide de la gravité.

7. Procédé selon l'une ou plusieurs des revendications 1 à 5, **caractérisé en ce que** le vidage des canaux (12) a lieu par application d'une pression.

8. Procédé selon l'une ou plusieurs des revendications 1 à 3 et 6, **caractérisé en ce que** l'immersion et le vidage, ou simplement le vidage des canaux (12) a lieu par pivotement et/ou rotation des canaux (12) autour d'un axe (6), qui s'étend perpendiculairement à la direction longitudinale des canaux (12) et qui se trouve de préférence approximativement dans la région du centre de gravité du faisceau (11) de canaux (12).

9. Procédé selon l'une ou plusieurs des revendications 1 à 6, **caractérisé en ce que** l'immersion et le vidage, ou simplement le vidage des canaux (12) a lieu par pivotement et rotation des canaux (12) autour d'un axe (6'), qui s'étend en direction longitudinale des canaux (12) et qui se trouve de préférence approximativement dans la région du centre de gravité du faisceau (11) de canaux (12).

10. Procédé selon la revendication 8 ou 9, **caractérisé en ce que** le pivotement a lieu à une situation du niveau (7) du liquide (2) qui se trouve approximativement à la hauteur de l'axe (6) pour le pivotement et/ou la rotation.

11. Procédé selon l'une ou plusieurs des revendications 1 à 10, **caractérisé en ce que** le remplissage et le vidage des canaux (12) et exécuté à une fréquence de 0,1 à 2 répétitions par minute.

12. Procédé selon l'une ou plusieurs des revendications 1 à 11, **caractérisé en ce que** l'on utilise pour le rinçage de l'eau à température ambiante ou à température accrue, de préférence avec des additifs augmentant les performances de nettoyage, comme par exemple des substances tensioactives.

13. Appareil de nettoyage, comprenant un récipient (1) rempli de liquide (2) jusqu'à un niveau (7) prédéterminé et le cas échéant modifiable, et un dispositif porteur (5) capable de pivoter et/ou de tourner autour d'un axe (6) pour la réception d'un dispositif à nettoyer (11), **caractérisé en ce que** le dispositif à nettoyer comprend un faisceau (11) de canaux (12) mutuellement parallèles fermement reliés les uns aux autres, et **en ce que** le dispositif porteur (5), qui est formé par un récipient de rinçage permettant une traversée du liquide, reçoit le faisceau (11) d'une telle manière que l'axe (6) s'étend approximativement perpendiculairement à l'extension longitudinale des canaux.

14. Dispositif selon la revendication 13, **caractérisé en ce que** le récipient de rinçage (5) comporte sur deux côtés mutuellement opposés (8, 9) des ouvertures de rinçage (10) pour la traversée du liquide (2) en vue de son entrée via les extrémités des canaux (12).

15. Dispositif selon la revendication 13 ou 14, **caractérisé en ce que** le récipient de rinçage (5) est pourvu de dispositifs de maintien pour le maintien d'un faisceau (11) de canaux (12), en particulier de dispositifs de serrage.

16. Dispositif selon l'une ou plusieurs des revendications 13 à 15, **caractérisé en ce que** le récipient de rinçage (5) est capable de pivoter et/ou de tourner autour d'un axe (6) au moyen d'un dispositif d'entraînement.

17. Dispositif selon l'une ou plusieurs des revendications 13 à 16, **caractérisé en ce que** le récipient de rinçage (5) est capable de pivoter et de tourner autour d'un axe (6') agencé parallèlement aux canaux (12), au moyen d'un dispositif d'entraînement.

18. Dispositif selon l'une ou plusieurs des revendications 16 et 17, **caractérisé en ce que** l'axe (6) récipient de rinçage (5) est agencé approximativement dans la région de son centre de gravité, et cela approximativement au milieu entre les ouvertures de rinçage (10).
